# EUROPEAN PATENT SPECIFICATION

(11) **EP 2 952 068 B1**
(45) Date of publication and mention of the grant of the patent: **30.12.2020**
(21) Application number: 14746140.4
(22) Date of filing: 31.01.2014
(51) Int. Cl.: H05G 1/02, G01N 21/01, G01N 21/84, G01V 5/00

(54) **PORTABLE SECURITY INSPECTION SYSTEM**
TRAGBARES SICHERHEITSINSPEKTIONSSYSTEM
SYSTÈME D'INSPECTION DE SÉCURITÉ PORTABLE

(30) Priority: 31.01.2013 US 201361759211 P
(43) Date of publication of application: 09.12.2015
(73) Proprietor: Rapiscan Systems, Inc., Torrance, CA 90503 (US)
(72) Inventor: MORTON, Edward, James, Guildford, Surrey GU1 2SL (GB)
(74) Representative: Barker Brettell LLP
(86) International application number: PCT/US2014/014198
(87) International publication number: WO 2014/121097

(56) References cited:
- EP-A1- 0 412 190
- WO-A1-2011/008718
- WO-A2-2009/088706
- US-A- 5 842 578
- US-A1- 2008 159 591
- US-A1- 2012 099 710
- US-A1- 2013 001 048

## Description

### CROSS-REFERENCE

The present application relies upon United States Provisional Patent Application Number 61/759,211 entitled "Portable Security Inspection System" and filed on January 31, 2013.

### FIELD

The present specification generally relates to portable inspection systems. More particularly, the present specification relates to a portable integrated X-ray inspection system that can be deployed at a plurality of surveillance locations, for performing a comprehensive security check of passing vehicles and cargo at various heights.

### BACKGROUND

Trade fraud, smuggling and terrorism have increased the need for various non-intrusive inspection systems in applications ranging from curb-side inspection of parked vehicles to scanning in congested or high-traffic ports because transportation systems, which efficiently provide for the movement of commodities across borders, also provide opportunities for the inclusion of contraband items such as weapons, explosives, illicit drugs and precious metals. The term port, while generally accepted as referring to a seaport, also applies to a land border crossing or any port of entry.

X-ray systems are used for medical, industrial and security inspection purposes because they can cost-effectively generate images of internal spaces not visible to the human eye. Materials exposed to X-ray (or any other type of) radiation absorb differing amounts of X-ray radiation and, therefore, attenuate an X-ray beam to varying degrees, resulting in a transmitted or backscattered level of radiation that is characteristic of the material. The attenuated or backscattered radiation can be used to generate a useful depiction of the contents of the irradiated object. A typical single energy X-ray configuration used in security inspection equipment may have a fan-shaped or scanning X-ray beam that is transmitted through or backscattered by the object inspected. The absorption or backscattering of X-rays is measured by detectors after the beam has passed through the object and an image is produced of its contents and presented to an operator.

With limited space and a need to expand, finding suitable space to accommodate additional inspection facilities along the normal process route remains difficult. Additionally, selected locations are not necessarily permanent enough for port operators to commit to the long term installation of inspection equipment. Moreover, systems incorporating high-energy X-ray sources, or linear accelerators (LINAC), require either a major investment in shielding material (generally in the form of concrete formations or buildings) or the use of exclusion zones (dead space) around the building itself. In either case, the building footprint requirement is generally too significant depending upon the size of cargo containers to be inspected.

A mobile inspection system offers an appropriate solution to the need for flexible, enhanced inspection capabilities. Because the system is relocatable and investment into a permanent building in which to accommodate the equipment is obviated, site allocation becomes less of an issue and introducing such a system becomes less disruptive. Also, a mobile inspection system provides operators, via higher throughput, with the ability to inspect a larger array of cargo, shipments, vehicles, and other containers.

Conventional inspection systems are disadvantageous in that they suffer from a lack of rigidity, are difficult to implement, and/or have smaller fields of vision. Specifically, conventional relocatable inspection systems generally comprise at least two booms, wherein one boom will contain a plurality of detectors and the other boom will contain at least one X-ray source. The detectors and X-ray source work in unison to scan the cargo on the moving vehicle. In conventional single boom relocatable inspection systems, the X-ray source is located on a truck or flatbed and the detectors on a boom structure extending outward from the truck. These systems are characterized by moving-scan-engine systems wherein the source-detector system moves with respect to a stationary object to be inspected. Also, the detectors and the source of radiation are either mounted on a moveable bed, boom or a vehicle such that they are integrally bound with the vehicle. This limits the flexibility of dismantling the entire system for optimum portability and adjustable deployment to accommodate a wide array of different sized cargo, shipments, vehicles, and other containers. As a result these systems can be complicated to deploy and pose several disadvantages and constraints.

Accordingly, there is need for improved inspection methods and systems that may be rapidly loaded over a truck or a trailer being pulled by any vehicle and transported to a surveillance location for rapid and facile deployment.

There is also need for a portable inspection system that does not require a specialized, expensive transportation vehicle in order to be transported to a surveillance site.

There is a further need for a portable inspection system that is light weight and may be rapidly deployed for inspection.

The patent publication WO 2011/008718 A1 discloses a drive-through rapidly relocatable inspection system containing an X-ray source and a detector. The system can be folded and loaded on a trailer.

### SUMMARY

According to one aspect, the present invention provides an inspection system as defined in claim 1.

In one embodiment, said plurality of data includes at least one of dimensions of the objects under inspection, desired inspection area, detector array configuration, desired field of view, X-ray source type, X-ray source configuration, constraining structures, and the presence of people.

In one embodiment, said container further comprises vertical recesses at each of four corners to accommodate said legs.

In one embodiment, in a stowed position, said legs rest within said vertical recesses to lie at least partially embedded with respect to the vertical walls of said container.

In one embodiment, in a deployed position, each leg is in contact with the ground and the container is not resting on a trailer portion of a transportation vehicle.

In one embodiment, said at least one source and said at least one detector array are configured to generate scan information from an object under inspection.

In one embodiment, once deployed, said legs are telescopically retracted such that said container is in contact with the ground, and two of said four walls of said container are folded down.

In one embodiment, once two of said four walls of said container are folded down, said ceiling is adapted to be vertically extended to form a drive through portal at said surveillance site.

In one embodiment, said at least one source and said at least one detector array are configured to generate multi-view scan images of an object under inspection.

According to another aspect, the present invention also provides a method of deploying an inspection system as defined in claim 10.

In one embodiment of the method, a height of said plurality of legs is adjusted to accommodate a plurality of scanning heights. In one embodiment of the method, the height of said container above the ground is determined using a plurality of data wherein said plurality of data includes at least one of dimensions of the objects under inspection, desired inspection area, detector array configuration, desired field of view, X-ray source type, X-ray source configuration, constraining structures, and the presence of people.

In one embodiment of the method, each one of said plurality of legs is adapted to be fully retracted such that said container is positioned at ground level, and wherein two of said four walls of said container are folded down and said ceiling is vertically extended upwards to form a drive through portal at said surveillance site.

The aforementioned and other embodiments of the present invention shall be described in greater depth in the drawings and detailed description provided.

### BRIEF DESCRIPTION OF THE DRAWINGS

These and other features and advantages of the present specification will be further appreciated, as they become better understood by reference to the detailed description when considered in connection with the accompanying drawings:
Figure 1 is a block diagram of an exemplary X-ray inspection system encased in a box, in accordance with an embodiment of the present specification;
Figure 2A illustrates the X-ray inspection system encased in a box loaded on a vehicle for transportation, in accordance with an embodiment of the present specification;
Figure 2B illustrates the X-ray inspection system encased in a box comprising extendable legs in accordance with an embodiment of the present specification;
Figure 3 illustrates a plurality of exemplary container heights to scan vehicles of differing heights;
Figure 4A is a perspective view of the X-ray inspection system encased in a container comprising extendable legs and stowed on a trailer;
Figure 4B illustrates the legs being horizontally extended out from the container;
Figure 4C illustrates a first intermediate vertically extended leg-position;
Figure 4D illustrates a second intermediate vertically extended leg-position;
Figure 4E is a close-up view of the leg being horizontally and vertically extended from the container;
Figure 4F illustrates the legs being vertically extended enough to lift the container off from the trailer;
Figure 4G illustrates the container being deployed on its four extended legs while the supporting trailer is moved away from beneath the container;
Figure 4H illustrates the container being deployed on its four extended legs;
Figure 4I illustrates the container being deployed at a first exemplary height above the ground;
Figure 4J illustrates the container being deployed at a second exemplary height above the ground;
Figure 4K illustrates scanning of a passing vehicle using the deployed container encasing the X-ray inspection system;
Figure 4L illustrates the positioning of the trailer beneath the deployed container to begin reloading of the container onto the trailer;
Figure 4M illustrates the container being lowered onto the trailer;
Figure 4N illustrates the container stowed onto the trailer;
Figure 4O illustrates the X-ray inspection system encased in the container stowed on the stationery trailer being used to scan a passing vehicle;
Figure 5A illustrates a trailer chassis equipped to safely stow the container, in accordance with an embodiment;
Figure 5B illustrates the container being received over the equipped trailer chassis;
Figure 6 is a schematic representation of an X-ray source detector assembly known in the art that may be used in the X-ray inspection system, in accordance with an embodiment of the present specification;
Figure 7A illustrates a source/detector assembly, in accordance with an embodiment of the present specification;
Figure 7B illustrates a source/detector assembly, in accordance with another embodiment of the present specification;
Figure 8 is a multi-view X-ray source detector assembly employed in the X-ray inspection system, in accordance with an embodiment of the present specification;
Figure 9A illustrates an embodiment of a container with extended roof;
Figure 9B illustrates the container with folded down side walls and extended roof to form a drive-through portal; and
Figure 9C is a cross-sectional side view of the container with a source/detector assembly, in accordance with an embodiment of the present specification.

### DETAILED DESCRIPTION

The present specification describes a portable radiation inspection system. In various embodiments the portable inspection system is designed to be easily encased in a container, such as, but not limited to as a reinforced box, which may be transported to a plurality of locations requiring surveillance. The inspection system in the box may be rapidly deployed at a surveillance location, without requiring complex set up procedures. Further, in various embodiments, both the inspection system and the encasing box are made of lightweight components, allowing transportation of the same by using any suitable vehicle such as a truck or a trailer, and easy deployment at a surveillance site. In various embodiments the portable inspection system is used to scan objects such as passing vehicles or cargo positioned outside the encasing box with radiation.

The present specification is directed towards multiple embodiments. The following disclosure is provided in order to enable a person having ordinary skill in the art to practice the specification. Language used in this specification should not be interpreted as a general disavowal of any one specific embodiment or used to limit the claims beyond the meaning of the terms used therein. The general principles defined herein may be applied to other embodiments and applications without departing from the scope of the invention as defined by the claims. Also, the terminology and phraseology used is for the purpose of describing exemplary embodiments and should not be considered limiting. For purpose of clarity, details relating to technical material that is known in the technical fields related to the invention have not been described in detail so as not to unnecessarily obscure the present specification.

It should be noted herein that although the system described in the present specification, refers to the use of X-ray radiation, any suitable radiation source or combination thereof may be employed with the present invention. Examples of other suitable radiation sources comprise Gamma-ray, microwave, optical, radio frequency, millimeter wave, terahertz, infra-red and ultrasound radiations.

As would be apparent to persons of skill in the art, the cost and complexity of a suitable transportation vehicle is a limitation in the use of portable radiation inspection systems in remote locations. The present specification provides a self-contained inspection system which may be transported to a surveillance site without requiring the use of any specialized and expensive vehicles for transportation, and may be easily deployed there, ready to start automated inspection of passing vehicles and cargo.

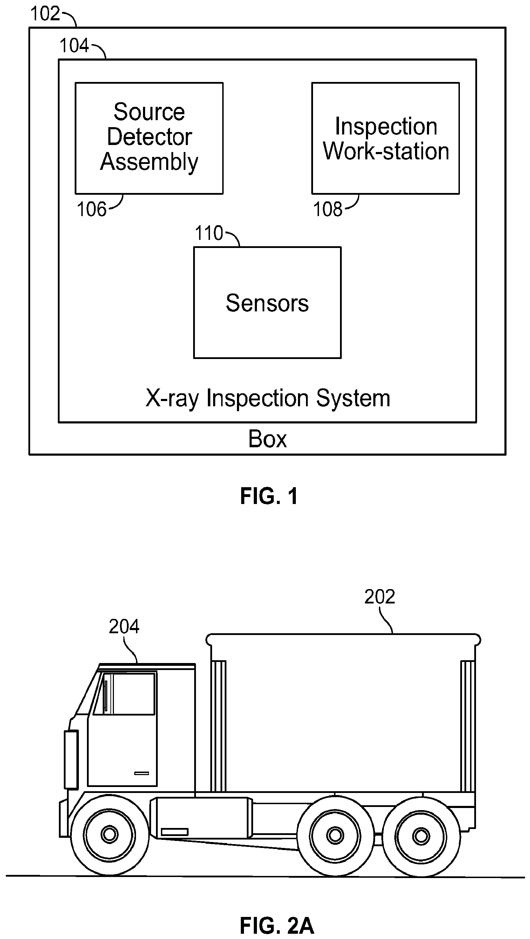

Figure 1 is a block diagram showing an exemplary inspection system encased in a box, in accordance with an embodiment of the present specification. In various embodiments, the inspection system 102 is encased in a container, such as a box 104, having four sides, a floor and ceiling, and comprises a source-detector assembly 106 for obtaining a radiographic image of an object being inspected, and an inspection workstation 108. Image data from the source-detector assembly 104 is transferred to the inspection workstation 108 which may be located adjacent to the source-detector assembly 106, within the container, or remotely as required in the application. The inspection workstation 108 may be located inside an armored vehicle, in an existing building, in a temporary structure or within the inspection system 102. The inspection workstation is in data communication with the inspection system using any form of wired or wireless communication.

In various embodiments, the portable radiation inspection system of the present specification comprises an X-ray source and a plurality of detectors for obtaining a radiographic image of an object being inspected.

In an embodiment, the X-ray inspection system comprises high energy inspection equipment based on transmission imaging with X-ray radiation generated by a linear accelerator with typical beam quality of lMeV to 9MeV. Such systems are very effective at probing the structure and shape of relatively high atomic number articles.

In an embodiment, the X-ray inspection system 102 also comprises one or more sensors 110 for analysis of one or more parameters of passing vehicles and cargo. Examples of sensors 110 include photographic devices, video cameras, thermal cameras, Infrared (IR) cameras, trace chemical detection equipment, radio frequency (RF) monitoring devices, RF jamming devices, automated number plate capture systems and automated container code capture systems. In an embodiment, ancillary data, including image, video, graphic, temperature, heat, chemical, communication signals, or other data, obtained via the sensors 110 is also transferred to the inspection workstation 108 and presented in a graphical form for system inspector's review. In one embodiment, ancillary data is advantageously combined to produce an overall consolidated threat report for the system inspector.

In various embodiments, the portable X-ray inspection system of the present specification can be used with any vehicle that allows for the system to be rapidly re-locatable and easily transportable. Figure 2A illustrates the X-ray inspection system of the present specification encased in a box 202 which is capable of being transported on the back of a vehicle 204 at highway speeds from one surveillance site to another. In an embodiment, the weight of the X-ray inspection system encased in the box 202 ranges from 100 kilograms to 4500 kilograms depending on site-specific sensor configuration and integrated shielding requirements.

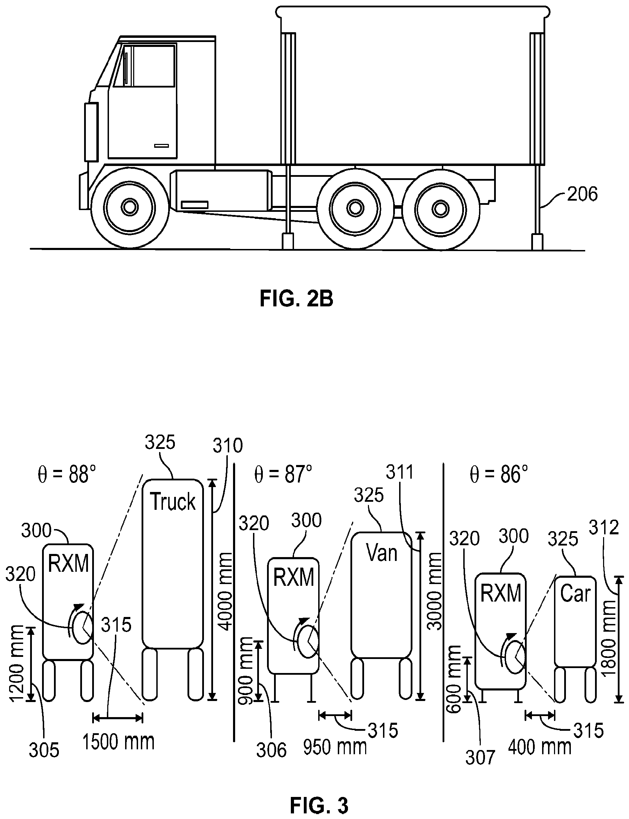

Figure 2B illustrates the X-ray inspection system encased in a box 202 comprising extendable legs 206 which may be drawn down to ground level to support the full weight of the X-ray inspection system. The extendable legs 206 are used to lift the X-ray inspection system up and off the back of the transport vehicle 204.

In various embodiments a plurality of extendable leg designs may be implemented, including any form of propelled movement such as mechanical, hydraulic and pneumatic designs, and all such designs are covered in the scope of this specification.

In an embodiment, the height of the extendable legs 206 may be adjusted causing the X-ray inspection system to be held at a desired height above the ground facilitating inspection of passing vehicles and cargo. In an embodiment, in addition to establishing an optimum height of the X-ray inspection system with respect to objects under inspection, the field of view of the X-ray inspection system (in a vertical plane) may also be adjusted for covering a required field of view while minimizing overall radiation exposure to the environment. In one embodiment, the field of view is adjusted manually by first using a multi-point switch, such as a three-position switch, to set the required height of the X-ray inspection system and then actuating a button (such as a raise or lower button) to affect movement of the inspection system to the earlier set height. In another embodiment, the field of view is adjusted automatically based on video analysis of an approaching object to be inspected.

In one embodiment, a controller is programmed to determine an optimum height of the extendable legs 206 based upon a plurality of data, including dimensions of the objects under inspection, desired inspection area, detector array configuration, desired field of view, X-ray source type, X-ray source configuration, and/or constraining structures or the presence of people. It should be appreciated that the controller may be used to control the height of any platform or supporting structure, if legs 206 are not specifically used. It should be understood by those of ordinary skill in the art that, depending upon the object under inspection and the checkpoint requirements, the plurality of data can be manipulated accordingly.

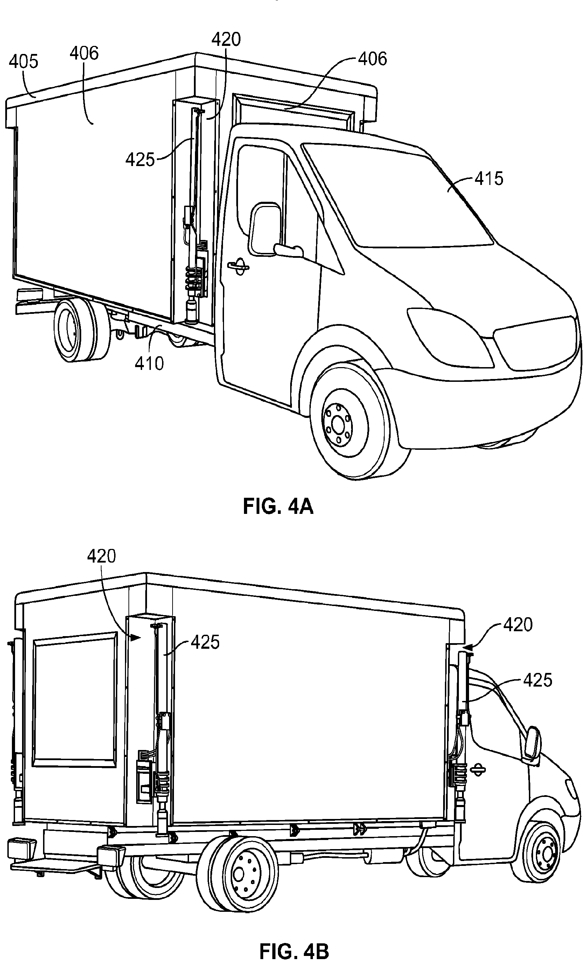

Once a scanning operation of X-ray inspection system at a surveillance site is completed, the X-ray inspection system encased in a box is re-loaded onto the back of a transportation vehicle by using the extendable legs and is rapidly transported to another surveillance site. In an embodiment, the X-ray inspection system may be towed from one surveillance site to another on a trailer behind a general purpose vehicle. The deployment and reload of the inspection system of the present invention is described in detail with respect to Figures 4A to 4Q below.

Figure 3 illustrates inspection container 300 positioned at different heights 305, 306, 307 above the ground to scan vehicles or objects 325 having differing heights 310, 311, 312. Further, inspection container 300 is positioned, in one embodiment, at a distance 315 from the object or vehicle under inspection. Still further, in one embodiment, inspection container 300 affords a field of view 320 of varying degrees depending upon the vehicle or object to be inspected.

In one embodiment, where vehicle 325 is a truck having a height 310 of approximately 4000 mm, inspection container 300 is positioned at a height 305 of 1200 mm from the ground. Further, inspection container is placed at a distance 315 of 1500 mm from the vehicle 307. This configuration affords an overall field of view 320 of 88 degrees.

In another embodiment, where vehicle 325 is a van having a height 311 of approximately 3000 mm, inspection container 300 is positioned at a height 306 of 900 mm from the ground. Further, inspection container is placed at a distance 315 of 950 mm from the vehicle 307. This configuration affords an overall field of view 320 of 87 degrees.

In yet another embodiment, where vehicle 325 is a car having a height 312 of approximately 1800 mm, inspection container 300 is positioned at a height 307 of 600 mm from the ground. Further, inspection container is placed at a distance 315 of 400 mm from the vehicle 307. This configuration affords an overall field of view 320 of 86 degrees.

The examples above are exemplary and it should be understood to those of skill in the art that adjustments may be made to achieve the scanning objectives of the present specification.

Figures 4A through 4O show perspective in-theater views of the inspection system of the present specification, encased in a container /compartment such as a box, being deployed from a transportation vehicle onto a surveillance site and then reloaded or stowed back onto the transportation vehicle.

Figure 4A illustrates the X-ray inspection system of the present specification, encased in container 405, and stowed on a trailer portion 410 of a transportation vehicle 415. In one embodiment, transportation vehicle 415 is a truck that is suitable for transport on surface streets or the highway, at regular speeds. In accordance with an embodiment of the present invention, the container 405 comprises four vertical walls 406, forming substantially a rectangular box. Further, container 405 comprises four vertical recesses 420 one on each of four corners of the container 405. Each vertical recess 420 accommodates a leg 425 that when in a stowed position, the legs 425 rest within the vertical recesses 420 such that they lie flush or slightly embedded with respect to respective vertical walls 406 of the container 405.

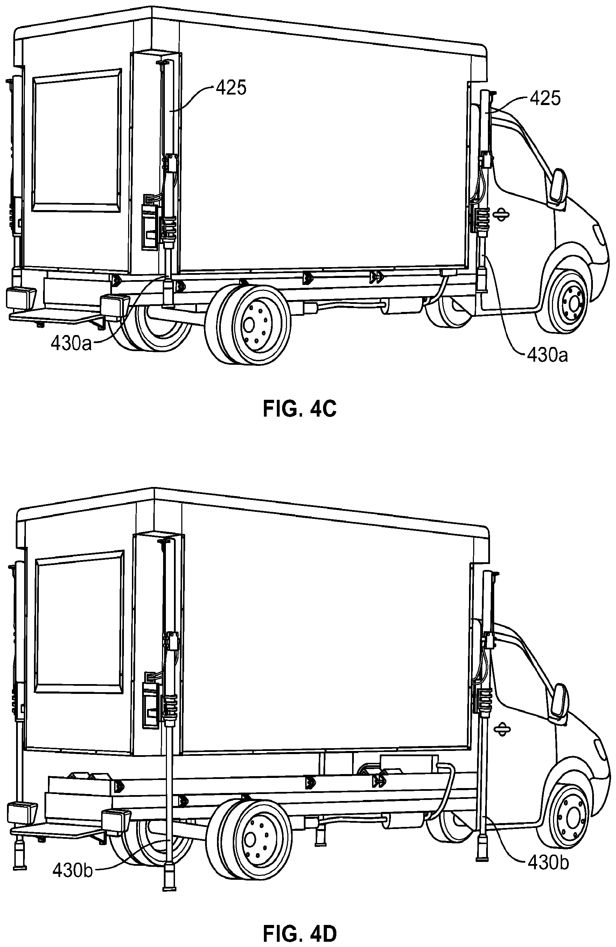

Each leg 425, in a deployed position, can be extended horizontally away from its respective corner of the container 405 and can also be extended up and down vertically, in a telescoping manner, so as to set the height of the base of the container 405 at variable heights above ground level. For deployment at a surveillance site, at least one of the legs 425 are first extended horizontally outwards from their respective vertical recesses 420, as shown in Figure 4B. It should be noted that it may not be required for all of the legs to extend horizontally and this is dependent upon the necessity of clearance for allowing the trailer wheels to pass through the legs. Thereafter, the legs 425 are extended vertically downwards as shown in a first intermediate vertically or telescopically extended leg-position 430a of Figure 4C and a second intermediate vertically or telescopically extended leg-position 430b of Figure 4D. As shown in Figure 4D, in extended leg-position 430b the legs 425 touch the ground.

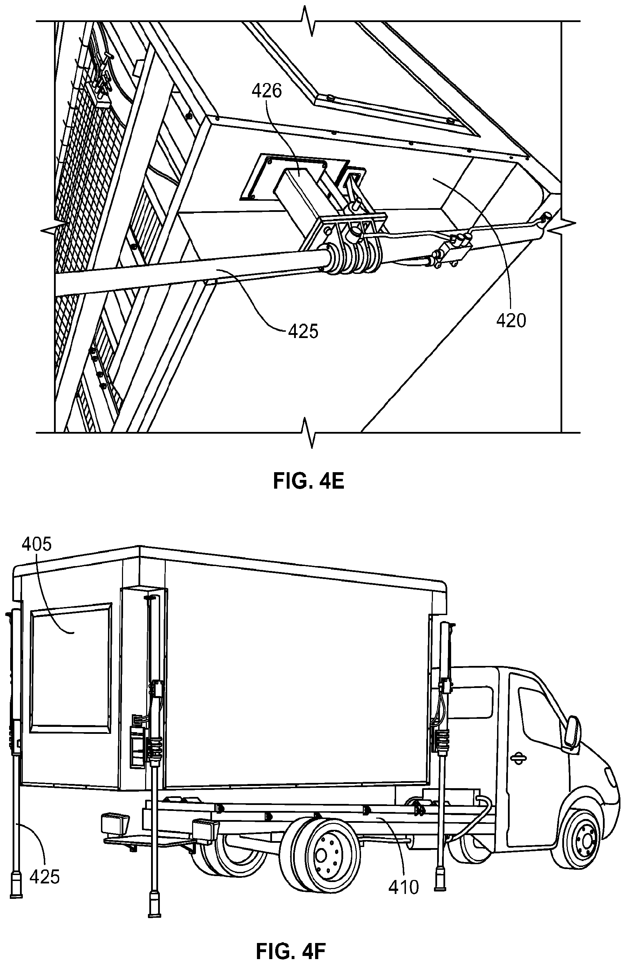

Figure 4E is a close-up view illustrating a piston 426 in horizontally extended position thereby enabling horizontal extension of the leg 425 outwardly from the vertical recesses 420. The leg 425 is also visible as having been telescoped vertically downwards so that it is in a vertically extended leg-position, such as position 430b of Figure 4D.

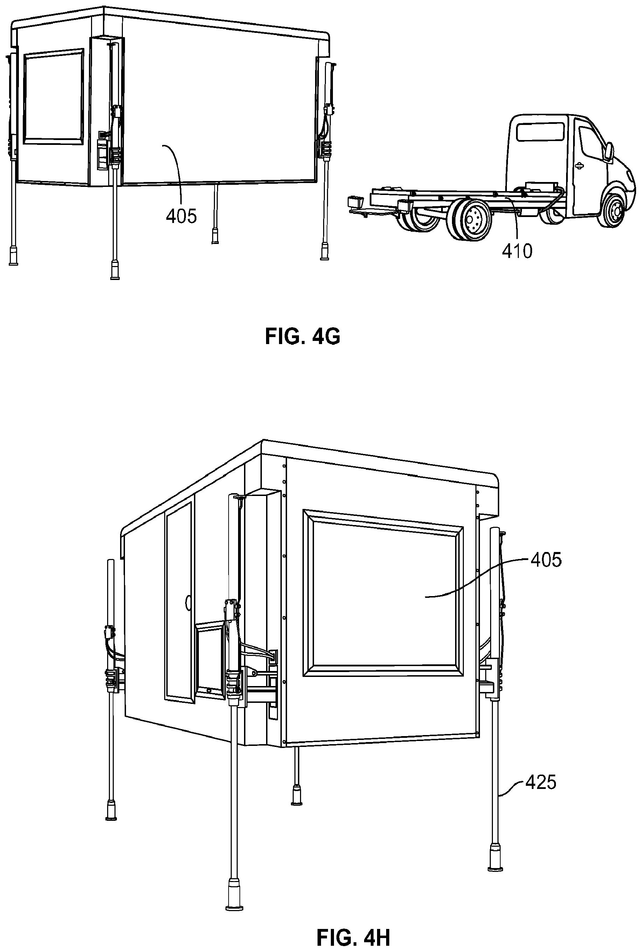

As shown in Figure 4F, the legs 425 are further telescoped or extended vertically downwards, beyond leg-position 430b of Figure 4D (wherein the legs 425 touched the ground), causing the container 405 to be raised and lifted off from the chassis of the trailer 410. Once the container 405 is positioned at an optimal height and all four legs 425 are touching the ground, the trailer 410 is towed away from beneath the container 405 as shown in Figure 4G.

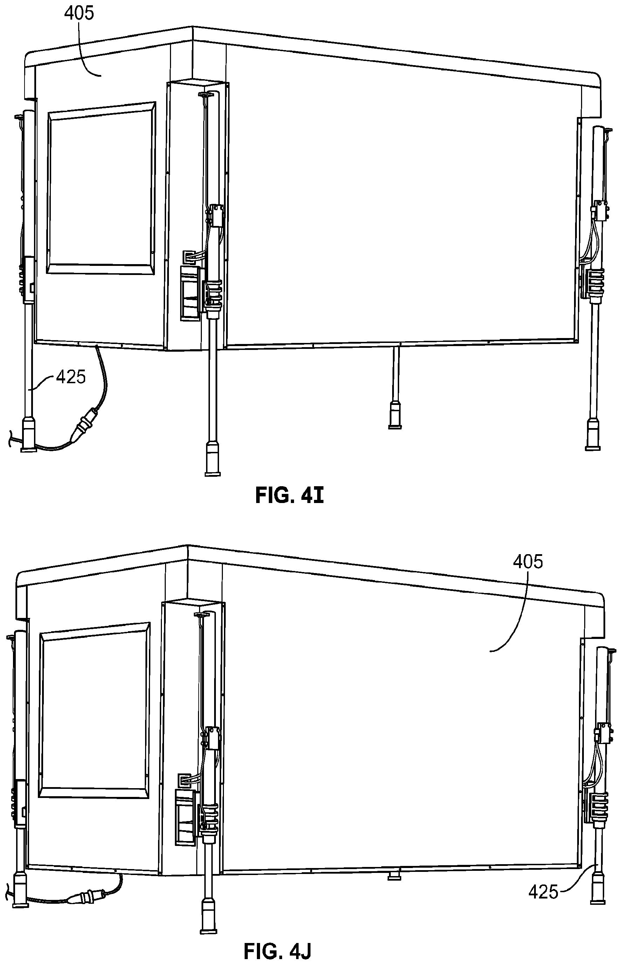

As a result, as shown in Figure 4H, the container 405 is now deployed and standing on fully extended/telescoped legs 425 at a first height at the surveillance site. The height of the base of the container 405 above ground can now be adjusted, for scanning, by using the vertical telescopic movement of legs 425. Figure 4I illustrates legs 425 in a second vertically retracted position to place the container 405 at a second height while Figure 4J shows the legs 425 in a third vertically retracted position to place the container 405 at a third height. Persons of ordinary skill in the art should appreciate that once deployed on the ground the legs 425 can be retracted or extended vertically to respectively lower or raise the container 405 at varying distances above ground to accommodate different scanning heights. The first, second and third heights of the container 405 in Figures 4H through 4J correspond to container heights 305, 306, 307 of Figure 3.

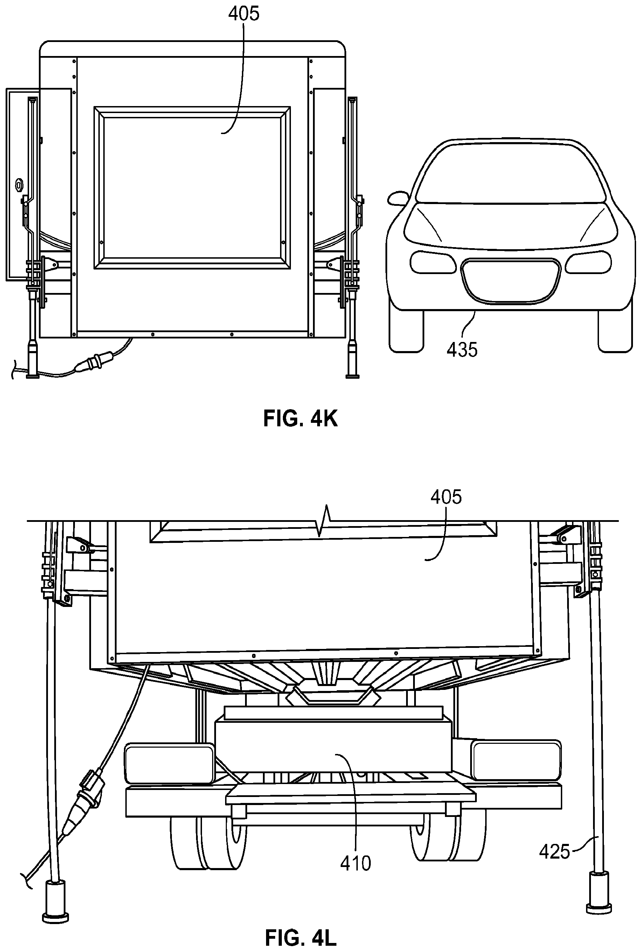

Once legs 425 are retracted or extended vertically to suitably position the height of the container 405, a target object or vehicle can be scanned. For example, as shown in Figure 4K, the container 405 is positioned at a suitable height to scan a passing car 435 and generate a radiographic scan image of the car 435.

Referring now to Figure 4L, for transport or redeployment at another site the container 405 needs to be stowed or reloaded onto trailer 410. Thus, trailer 410 is driven so that it is positioned beneath container 405 that is deployed at the surveillance site. If necessary, the height of the container 405 is adjusted by extending the legs 425 vertically so that trailer 410 can be driven unhindered below the container 405. To enable safe positioning of the trailer 410 beneath the container 405 and to avoid bumping of the transportation vehicle into the container, while reverse driving to position the trailer 410 below the container 405, a plurality of safeguards are provided such as a) having a reversing camera on the transportation vehicle, b) having a metal "buffer" behind the driver's cab so that the driver knows when he is in position, and c) having a position sensor on the container 405 (on the wall of the container 405 that faces the reversing transportation vehicle) which actuates when the transportation vehicle is approximately close to correct positioning for reloading the container 405 onto trailer 410.

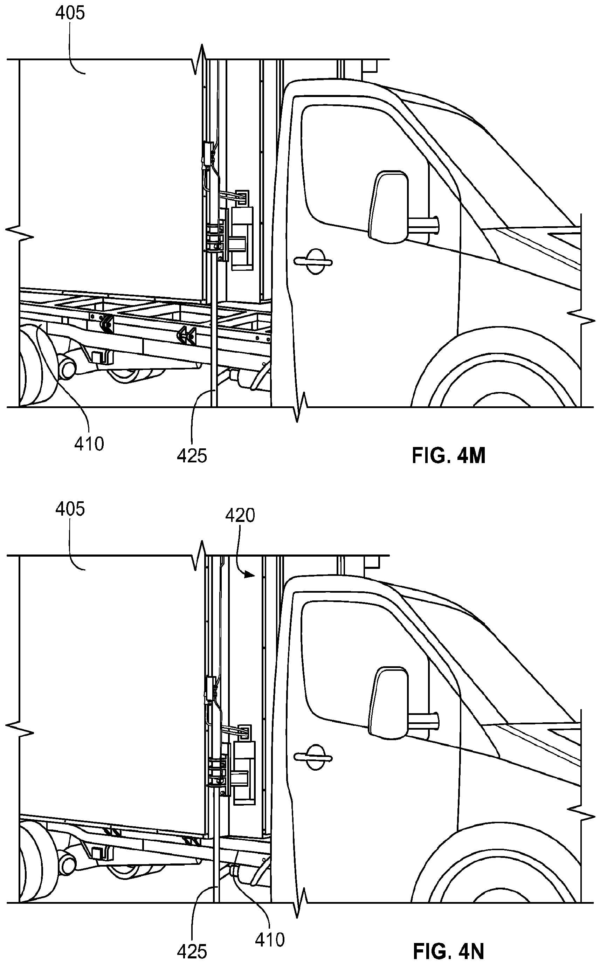

Once the trailer 410 is positioned below the container 405, the legs 425 are vertically retracted, as shown in Figure 4M, thereby lowering the container 405 gradually onto the trailer 410. Figure 4N shows the container 405 in a stowed position on trailer 410. Once on trailer 410, the legs 425 are fully retracted vertically; thereafter, legs 425 are fully retracted horizontally to lie within the vertical recesses 420.

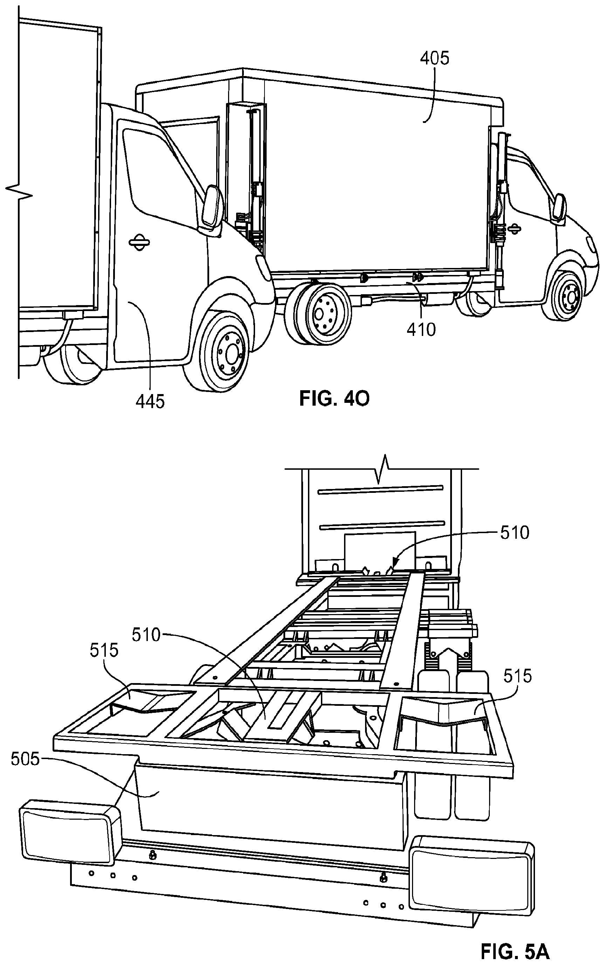

In accordance with an aspect of the present invention, a moving target (such as a vehicle) can also be scanned while the container is in stowed position on the stationery trailer. Figure 4O shows the container 405 stowed on the stationery trailer 410 while a truck 445 passes by. The passing truck 445 is scanned to produce a radiographic image thereof. In one embodiment, the height of the container 405 when in stowed position on the trailer 410 corresponds to height 306 of Figure 3.

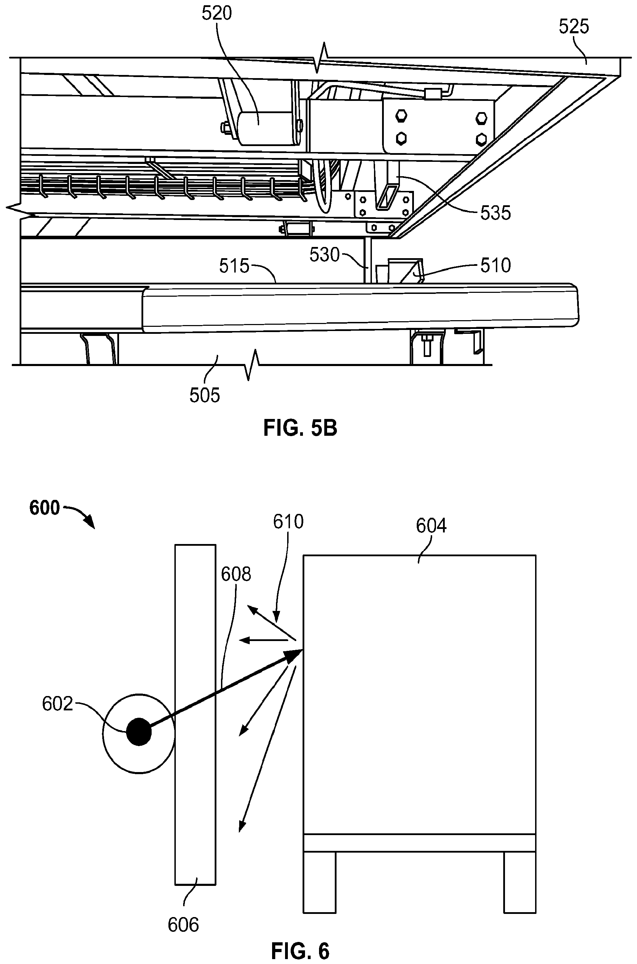

The chassis of the trailer is suitably equipped to ensure that the container, encasing the X-ray inspection system, is safely stowed onto the chassis for transportation as well as for scanning targets while stowed on the chassis. In one embodiment, as shown in Figure 5A, the trailer chassis 505 is equipped with a pair of container mounting brackets 510 located at the front and rear of the chassis 505, as well as four 'V' shaped container locating plates 515, one located at each corner of the chassis 505. As shown in Figure 5B, the four locating plates 515 and corresponding rollers 520 (at the base of the container 525) ensure that the container 525 aligns with the front and rear mounting brackets 510 when being lowered onto the chassis 505. In one embodiment, after the container 525 has been lowered onto the chassis 505, the four legs 530 move inboard to the stowed position and are held in place by an angled plate 535 located on each of the four leg assemblies 530. The angled plate 535 on the inboard end of each leg 530, locates into a cradle on each side of the mounting bracket 510, securing the container 525 in the stowed position on the chassis 505.

Figure 6 is a schematic representation of a radiation source and detector assembly 600 known in the art that may be used in the inspection system of the present specification. In one embodiment, the assembly 600 comprises an X-ray source, in the form of a rotating disc X-ray source 602. An object to be scanned is shown in the form of a truck or lorry 604. In one embodiment, a detector 606 is arranged on the same side of the truck or lorry as the source. The source is arranged to irradiate a single region of the object at any one time (i.e. in any one irradiation event or burst). The source produces a tightly collimated pencil beam 608 which irradiates a point on the object 604. Radiation 610 is scattered in all directions and is detected at the detector 606. The detector 606 measures the amount of radiation per irradiation event in order to provide information on the point of the object being irradiated during that event.

In another embodiment, the X-ray source employed in the inspection system of the present specification comprises a multi-element scatter collimator to produce a fan beam of X-rays for irradiating the object being scanned; backscattered X-rays from the object being detected by a segmented detector array located behind the multi-element collimator and comprising one detector element corresponding to each collimator element. Such an X-ray source is described in United States Patent Application Number 13/368,202, assigned to the Applicant of the present specification, and herein incorporated by reference in its entirety.

In yet another embodiment of the present specification, an X-ray backscatter source detector assembly is combined with a high intensity linear accelerator based transmission imaging source detector assembly, in order to spatially correlate surface X-ray backscatter imaging with bulk object transmission imaging as a further investigation in detection of illicit materials and objects in cargo items.

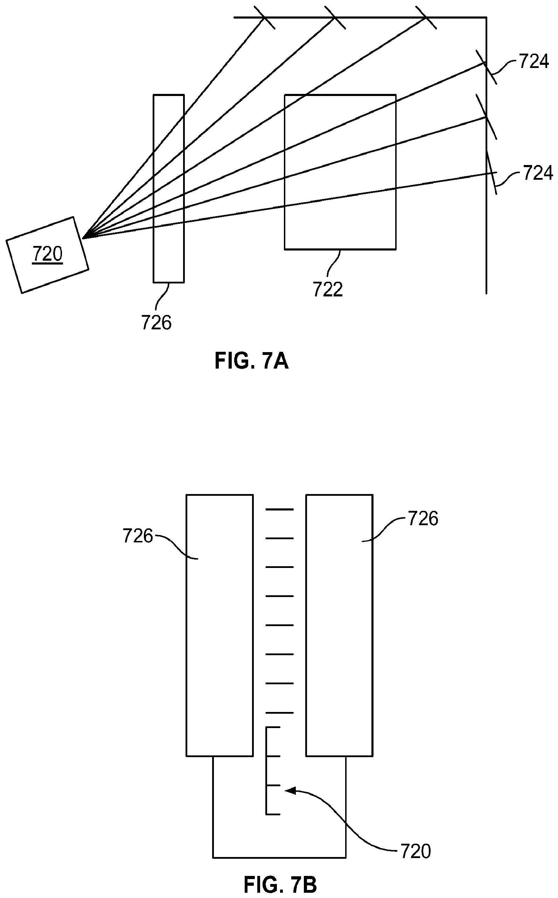

Figure 7A illustrates a source detector assembly, in accordance with an embodiment of the present specification. Here, an X-ray linear accelerator (linac) 720 is used to fire a collimated fan-beam of high energy (at least 900 keV) radiation through an object 722 under inspection and towards a set of X-ray detectors 724 which can be used to form a high resolution transmission X-ray imaging of the item under inspection. The X-ray linear accelerator beam is pulsed, so that as the object under inspection moves through the beam, the set of one-dimensional projections can be acquired and subsequently stacked together to form a two-dimensional image. In this embodiment, an X-ray backscatter detector 726 is placed close to the edge of the inspection region on the same side as the X-ray linear accelerator 720 but offset to one side of the X-ray beam so that it does not attenuate the transmission X-ray beam itself.

In accordance with an alternate embodiment, the source 720 is a low energy X-ray tube source with energies in the range of 60keV to 450keV.

As mentioned above, it should be noted herein that the radiation source can be, in alternate embodiments, one or a combination of Gamma-ray, microwave, optical, radio frequency, millimeter wave, terahertz, infra-red and ultrasound radiations in addition to high and low energy X-ray.

Figure 7B illustrates a source detector assembly, in accordance with another embodiment of the present specification. It is advantageous to use two backscatter imaging detectors 726, one on either side of the primary beam. In some embodiments the backscatter detectors may be arranged differently. In some embodiments there may be only one backscatter detector. In other embodiments there may be more than two such detectors. X-ray inspection systems employing such a backscatter source detector assembly are described in United States Patent Application Number 12/993,831, assigned to the Applicant of the present specification, and herein incorporated by reference in its entirety.

In another embodiment, the present specification provides a multi-view source/detector assembly comprising four discrete backscatter source detector assemblies that re-use the pencil beam from one backscatter system to illuminate large area detectors from a second backscatter system so that simultaneous multi-sided backscatter and transmission imaging using the same set of four X-ray beams can be achieved.

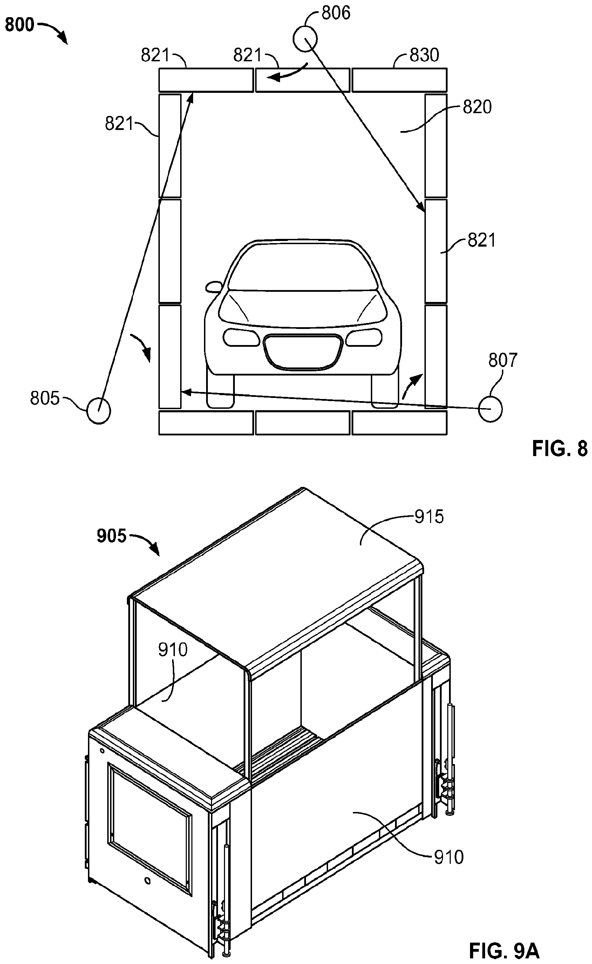

Figure 8 is a multi-view X-ray source detector assembly employed in the X-ray inspection system, in accordance with an embodiment of the present specification. In one embodiment, system 800 has a three-view configuration enabled by three simultaneously active rotating X-ray beams 805, 806 and 807 with plurality of detectors placed correspondingly, in one embodiment, in transmission configuration to form a scanning tunnel 820. System 800 provides a high degree of inspection capability, in accordance with an object of the present specification, while at the same time achieving this at substantially low X-ray dose since the volume of space irradiated at any moment in time is low compared to conventional prior art line scan systems that typically have large numbers of pixelated X-ray detectors and fan-beam X-ray irradiation. As shown in Figure 8, there is almost no cross-talk between the three X-ray views which are collected simultaneously.

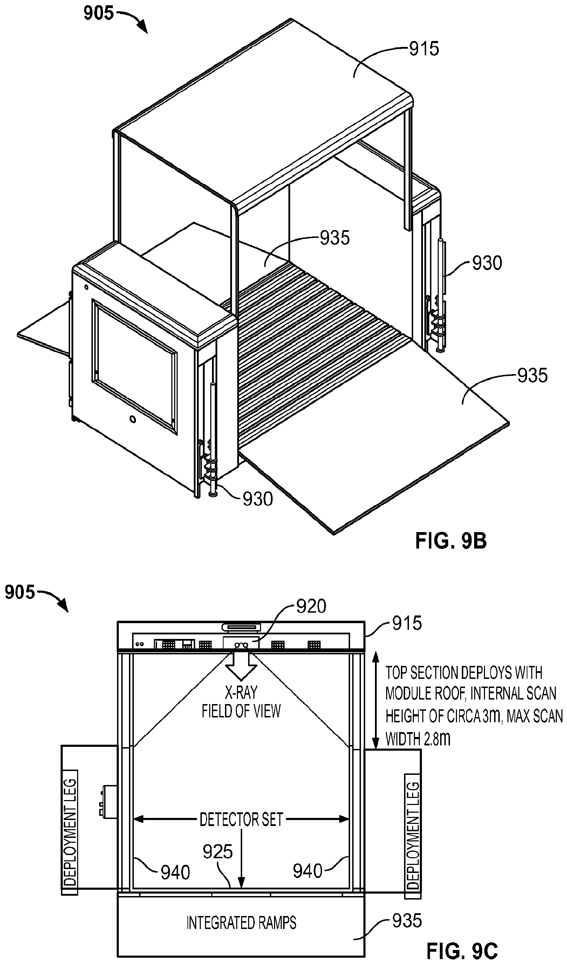

To enable multi-view scanning, in another embodiment, the radiation inspection system of the present invention is operable in drive-through portal format. Figures 9A and 9B illustrate an embodiment of a container 905, encasing an inspection system, which has fold-down outer walls 910 and a vertically extendable ceiling 915. As shown in Figure 9B, once the container 905 is deployed at a surveillance site on four legs 930, ceiling 915 is vertically extended and outer walls 910 (referenced in Figure 9A) are folded downwards to form a ramp 935 to enable a target vehicle, such as a car, to be driven onto ramp 935 and through the container 905.

Figure 9C shows a side cross-sectional schematic view of the container 905 formed into a drive-through portal with vertically extended ceiling 915 and folded down walls forming the ramp 935. In one embodiment, an X-ray source 920 is positioned at the ceiling 915 and a plurality of detectors are provided within the container 905. In one embodiment, three detector arrays are strategically positioned: a first detector on floor or base 925 and a second and third detector array positioned within the two fixed walls 940 of the container 905. In further embodiments, one or more detectors are placed at the ceiling 915, such as one on either side of the source 920 to enable the generation of both backscatter and transmission scan images of a target vehicle passing through the container 905. In still further embodiments, additional radiation sources are placed at side walls 940 to enable the multi-view inspection system 800 of Figure 8.

According to an aspect of the present specification, there is almost no limit to the number of views which may be collected simultaneously in the system 800 with each detector segment 821 being irradiated by no more than one primary X-ray beam at any one time. In one embodiment, the detector configuration 830, shown in Figure 8, comprises 12 detector segments 821 each of, say, 1m length to form an inspection tunnel of 3m (Width) x 3m (Height). In one embodiment, the detector configuration 830 is capable of supporting six independent X-ray views to allow transition of the sweeping X-ray views between adjacent detectors. An alternate embodiment comprising 0.5m long detector segments 821 is capable of supporting up to 12 independent X-ray image views.

Persons of ordinary skill in the art should appreciate that in system 800 of the present specification, volume of detector material is independent of the number of views to be collected and the density of readout electronics is quite low compared to conventional prior art pixelated X-ray detector arrays. Additionally, a plurality of X-ray sources can be driven from a suitably rated high voltage generator thereby enabling additional X-ray sources to be added relatively simply/conveniently. These features enable the high density multi-view system 800 of the present specification to be advantageously feasible in security screening context. Such a multi-view X-ray inspection system has been described in United States Patent Application Number 13/756,211 (published as US 2014/0044233 A1)).

As would be apparent to persons of skill in the art, a plurality of types of X-ray source detector assemblies may be employed in the portable x-ray inspection system of the present specification, such as, but not limited to the exemplary source detector assemblies described above.

Hence, the portable x-ray inspection system of the present specification is a rugged inspection system that may be easily transported from one surveillance site to another without the need for specialized, expensive, transportation vehicles. Further the portable x-ray inspection system is a light weight system which may be encased in a box for transportation and easy deployment at a plurality of surveillance locations.

The above examples are merely illustrative of the many applications of the system of present specification. Although only a few embodiments of the present specification have been described herein, it should be understood that the present specification might be embodied in many other specific forms without departing from the scope of the specification as defined by the claims. Therefore, the present examples and embodiments are to be considered as illustrative and not restrictive.

## Claims

1. An inspection system for screening an object under inspection, and configured to be transported on a trailer (410) of a vehicle (415), comprising:
a container (405) with four walls (406), four corners, a ceiling and a base that defines an enclosed volume, wherein in a stowed position said container (405) rests on the trailer portion (410) of the vehicle (415);
at least one radiation source (920), in particular an X-ray source, positioned within said enclosed volume, wherein emissions from said radiation source define a field of view;
at least one detector array positioned within said enclosed volume or physically attached to said container;
**characterized by** further comprising:
a piston (426) positioned in each of said four corners, wherein each piston is configured to move horizontally from a retracted state to an extended state; and
four legs (425), each of said four legs attached to a respective said piston at each of the four corners, wherein each of said four legs is adapted to be horizontally extendable outwards from a respective corner and retractable into a respective corner based on movement of the attached piston, wherein each of said four legs is extendable vertically downwards, when extended outwards, so that said legs are in contact with the ground to thereby lift said container (405) off from the trailer portion (410), and vertically adjustable to at least one height position from ground level, wherein said at least one height position is determined using a plurality of data.

2. The inspection system of claim 1 wherein said plurality of data includes at least one of dimensions of the objects under inspection, desired inspection area, detector array configuration, desired field of view, X-ray source type, X-ray source configuration, constraining structures, and the presence of people.

3. The inspection system of claim 1, wherein said container further comprises vertical recesses (420) at each of four corners to accommodate said legs (425).

4. The inspection system of claim 3, wherein in a stowed position said legs (425) rest within said vertical recesses (420) to lie at least partially embedded with respect to the vertical walls of said container.

5. The inspection system of any preceding claim, wherein in a deployed position, each leg (425) is in contact with the ground and the container is not resting on a trailer portion of a transportation vehicle.

6. The inspection system of any preceding claim, wherein said at least one source and said at least one detector array are configured to generate scan information from an object under inspection.

7. The inspection system of any preceding claim, wherein once deployed, said legs (425; 930) are telescopically retracted such that said container is in contact with the ground, and two of said four walls (910) of said container are folded down.

8. The inspection system of claim 7, wherein once two of said four walls (910) of said container are folded down, said ceiling (915) is adapted to be vertically extended upwards to form a drive through portal at said surveillance site.

9. The inspection system of any preceding claim, wherein said at least one source and said at least one detector array are configured to generate scan images of an object under inspection.

10. A method of deploying an inspection system comprising: a container (405) with four walls (406), a ceiling and a base that defines an enclosed volume, wherein said container (405) is stowed on a trailer portion (410) of a transportation vehicle (415); at least one radiation source, in particular an X-ray source, positioned within said enclosed volume, wherein emissions from said radiation source define a field of view; at least one detector array positioned within said enclosed volume or physically attached to said container; and a plurality of legs (425) attached, via pistons (426) to said container (405) at each of four corners of said container, the method comprising:
extending at least one of said plurality of legs (425) horizontally outwards from said four corners of said container using at least one of said pistons (426);
extending each of said plurality of legs (425) vertically downwards so that each of said plurality of legs is in contact with the ground at a surveillance site;
continuing to extend each of said plurality of legs (425) vertically downwards to enable said container (405) to be lifted off from the trailer portion (410) and be supported fully on said plurality of legs (425) at said surveillance site; and,
driving said trailer portion away from said surveillance site.

11. The method of claim 10 wherein a height of said plurality of legs is adjusted to accommodate a plurality of scanning heights.

12. The method of claim 11, wherein the height of said container above the ground is determined using a plurality of data wherein said plurality of data includes at least one of dimensions of the objects under inspection, desired inspection area, detector array configuration, desired field of view, X-ray source type, X-ray source configuration, constraining structures, and the presence of people.

13. The method of claim 10, 11 or 12, wherein each one of said plurality of legs is adapted to be fully retracted such that said container is positioned at ground level, and wherein two of said four walls (910) of said container are folded down and said ceiling (915) is vertically extended upwards to form a drive through portal at said surveillance site.

## Patentansprüche

1. Inspektionssystem zum Durchleuchten eines zu inspizierenden Objekts, das zum Transport auf einem Anhänger (410) eines Fahrzeugs (415) ausgelegt ist, umfassend:
einen Behälter (405) mit vier Wänden (406), vier Ecken, einer Decke und einer Basis, der ein umschlossenes Volumen definiert, wobei der Behälter (405) in einer verstauten Position auf dem Anhängerabschnitt (410) des Fahrzeugs (415) aufliegt;
mindestens eine Strahlungsquelle (920), insbesondere eine Röntgenquelle, die innerhalb des umschlossenen Volumens angeordnet ist, wobei die Emissionen der Strahlungsquelle ein Sichtfeld definieren;
mindestens eine Detektoranordnung, die innerhalb des umschlossenen Volumens angeordnet oder physisch am Behälter angebracht ist;
**dadurch gekennzeichnet, dass** es ferner umfasst:
einen Kolben (426), der in jeder der vier Ecken angeordnet ist, wobei jeder Kolben dazu ausgelegt ist, sich horizontal von einem eingezogenen Zustand in einen ausgefahrenen Zustand zu bewegen; und
vier Beine (425), wobei jedes der vier Beine an jeder der vier Ecken an einem jeweiligen Kolben angebracht ist, wobei jedes der vier Beine dazu angepasst ist, horizontal von einer jeweiligen Ecke nach außen ausfahrbar und in eine jeweilige Ecke basierend auf der Bewegung des befestigten Kolbens einziehbar zu sein, wobei jedes der vier Beine senkrecht nach unten ausfahrbar ist, wenn es nach außen ausgefahren ist, sodass die Beine den Boden in Kontakt mit dem Boden, um dadurch den Behälter (405) vom Anhängerabschnitt (410) abzuheben, und senkrecht einstellbar auf mindestens eine Höhenposition von der Bodenebene, wobei die mindestens eine Höhenposition unter Verwendung einer Vielzahl von Daten bestimmt wird.

2. Inspektionssystem gemäß Anspruch 1, wobei die Vielzahl von Daten mindestens eines der Abmessungen der zu inspizierenden Objekte, des gewünschten Inspektionsbereichs, der Ausbildung der Detektoranordnung, des gewünschten Sichtfelds, der Art der Röntgenquelle, der Konfiguration der Röntgenquelle, der Begrenzungsstrukturen und der Anwesenheit von Personen aufweist.

3. Inspektionssystem gemäß Anspruch 1, wobei der Behälter ferner senkrechte Aussparungen (420) an jeder der vier Ecken umfasst, um die Beine (425) aufzunehmen.

4. Inspektionssystem gemäß Anspruch 3, wobei in einer verstauten Position die Beine (425) in den senkrechten Aussparungen (420) ruhen, sodass sie mindestens teilweise in Bezug auf die senkrechten Wände des Behälters eingebettet sind.

5. Inspektionssystem eines vorhergehenden Anspruchs, wobei in einer aufgestellten Position jedes Bein (425) mit dem Boden in Kontakt ist und der Behälter nicht auf einem Anhängerabschnitt eines Transportfahrzeugs aufliegt.

6. Inspektionssystem gemäß einem vorhergehenden Anspruch, wobei die mindestens eine Quelle und die mindestens eine Detektoranordnung dazu ausgelegt sind, Abtastinformationen aus einem zu inspizierenden Objekt zu erzeugen.

7. Inspektionssystem gemäß einem vorhergehenden Anspruch, wobei die Beine (425; 930) nach dem Aufstellen teleskopartig eingezogen werden, sodass der Behälter mit dem Boden in Kontakt ist und zwei der vier Wände (910) des Behälters heruntergeklappt sind.

8. Inspektionssystem gemäß Anspruch 7, wobei nach dem Herunterklappen von zwei der vier Wände (910) des Behälters die Decke (915) senkrecht nach oben ausgefahren werden kann, um ein Durchfahrtportal an der Überwachungsstelle zu bilden.

9. Inspektionssystem gemäß einem vorhergehenden Anspruch, wobei die mindestens eine Quelle und die mindestens eine Detektoranordnung dazu ausgelegt sind, Mehrfachansichtsabtastbilder eines zu inspizierenden Objekts zu erzeugen.

10. Verfahren zum Aufstellen eines Inspektionssystems, umfassend: einen Behälter (405) mit vier Wänden (406), einer Decke und einer Basis, der ein umschlossenes Volumen definiert, wobei der Behälter (405) auf einem Anhängerabschnitt (410) eines Transportfahrzeugs (415) verstaut ist; mindestens eine Strahlungsquelle, insbesondere eine Röntgenquelle, die innerhalb des umschlossenen Volumens angeordnet ist, wobei Emissionen aus der Strahlungsquelle ein Sichtfeld definieren; mindestens eine Detektoranordnung, die innerhalb des umschlossenen Volumens angeordnet oder physisch am Behälter befestigt ist; und eine Vielzahl von Beinen (425), die über Kolben (426) am Behälter (405) an jeder von vier Ecken des Behälters angebracht sind, wobei das Verfahren umfasst:
Ausfahren mindestens eines der Vielzahl von Beinen (425) von den vier Ecken des Behälters horizontal nach außen unter Verwendung mindestens eines der Kolben (426);
Ausfahren jedes der Vielzahl von Beinen (425) senkrecht nach unten, sodass jedes der Vielzahl von Beinen an einer Überwachungsstelle mit dem Boden in Kontakt ist;
weiteres Ausfahren jedes der Vielzahl von Beinen (425) senkrecht nach unten, sodass der Behälter (405) vom Anhängerabschnitt (410) abgehoben und an der Überwachungsstelle vollständig auf der Vielzahl von Beinen (425) abgestützt werden kann; und,
Wegfahren des Anhängerabschnitts von der Überwachungsstelle.

11. Verfahren gemäß Anspruch 10, wobei eine Höhe der Vielzahl von Beinen zur Anpassung an eine Vielzahl von Abtasthöhen eingestellt wird.

12. Verfahren gemäß Anspruch 11, wobei die Höhe des Behälters über dem Boden unter Verwendung einer Vielzahl von Daten bestimmt wird, wobei die Vielzahl von Daten mindestens eines der Abmessungen der zu inspizierenden Objekte, des gewünschten Inspektionsbereichs, der Ausbildung der Detektoranordnung, des gewünschten Sichtfelds, der Art der Röntgenquelle, der Ausbildung der Röntgenquelle, der Begrenzungsstrukturen und der Anwesenheit von Personen enthält.

13. Verfahren gemäß Anspruch 10, 11 oder 12, wobei jedes der Vielzahl von Beinen dazu angepasst ist, vollständig eingezogen zu werden, sodass der Behälter auf Bodenebene angeordnet ist, und wobei zwei der vier Wände (910) des Behälters nach unten geklappt werden und die Decke (915) senkrecht nach oben ausgefahren wird, um ein Durchfahrtportal an der Überwachungsstelle zu bilden.

## Revendications

1. Système d'inspection destiné à contrôler un objet en cours d'inspection, et configuré pour être transporté sur une remorque (410) d'un véhicule (415), comprenant :
un conteneur (405) comportant quatre parois (406), quatre coins, un plafond et une base définissant un volume clos ; dans une position arrimée, ledit conteneur (405) reposant sur la partie remorque (410) du véhicule (415) ;
au moins une source de rayonnement (920), plus particulièrement une source de rayons X, positionnée à l'intérieur dudit volume clos, des émissions émanant de ladite source de rayonnement définissant un champ de vision ;
au moins un réseau de détecteurs positionné à l'intérieur dudit volume clos ou fixé physiquement audit conteneur ;
**caractérisé en ce qu'**il comprend en outre :
un piston (426) positionné dans chacun desdits quatre coins, chaque piston étant configuré pour effectuer un mouvement horizontal depuis un état escamoté jusqu'à un état d'extension ; et
quatre pieds (425), chacun desdits quatre pieds étant fixé à un dit piston respectif à chacun des quatre coins, chacun desdits quatre pieds étant adapté à être extensible horizontalement vers l'extérieur depuis un coin respectif et escamotable dans un coin respectif en fonction du mouvement du piston fixé, chacun desdits quatre pieds étant extensible verticalement vers le bas, lorsqu'il est étendu vers l'extérieur, de façon à ce que lesdits pieds soient au contact du sol pour ainsi soulever ledit conteneur (405) de la partie remorque (410), et réglable verticalement jusqu'à au moins une position en hauteur par rapport au niveau du sol, ladite au moins une position en hauteur étant déterminée à l'aide d'une pluralité de données.

2. Système d'inspection selon la revendication 1, dans lequel ladite pluralité de données comporte des dimensions des objets en cours d'inspection et/ou une zone d'inspection souhaitée et/ou une configuration du réseau de capteurs et/ou un champ de vision souhaité et/ou un type de la source de rayons X et/ou une configuration de la source de rayons X et/ou des structures restrictives et/ou la présence de personnes.

3. Système d'inspection selon la revendication 1, dans lequel ledit conteneur comprend en outre des renfoncements verticaux (420) à chacun de quatre coins pour accueillir lesdits pieds (425).

4. Système d'inspection selon la revendication 3, dans lequel, dans la position arrimée, lesdits pieds (425) reposent à l'intérieur desdits renfoncements verticaux (420) pour se tenir au moins partiellement encastrés par rapport aux parois verticales dudit conteneur.

5. Système d'inspection selon l'une quelconque des revendications précédentes, dans lequel, dans une position déployée, chaque pied (425) est au contact du sol et le conteneur ne repose pas sur une partie remorque d'un véhicule de transport.

6. Système d'inspection selon l'une quelconque des revendications précédentes, dans lequel ladite au moins une source et ledit au moins un réseau de détecteurs sont configurés pour générer des informations de balayage à partir d'un objet en cours d'inspection.

7. Système d'inspection selon l'une quelconque des revendications précédentes, dans lequel, une fois déployé, lesdits pieds (425 ; 930) s'escamotent de manière télescopique de façon à ce que ledit conteneur soit au contact du sol, et deux desdites quatre parois (910) dudit conteneur se rabattent.

8. Système d'inspection selon la revendication 7, dans lequel, une fois deux desdites quatre parois (910) dudit conteneur rabattues, ledit plafond (915) est adapté à s'étendre verticalement vers le haut pour former un portail de transit au niveau dudit site de surveillance.

9. Système d'inspection selon l'une quelconque des revendications précédentes, dans lequel ladite au moins une source et ledit au moins un réseau de détecteurs sont configurés pour générer des images de balayage multivues d'un objet en cours d'inspection.

10. Procédé de déploiement d'un système d'inspection comprenant : un conteneur (405) comportant quatre parois (406), un plafond et une base définissant un volume clos, ledit conteneur (405) étant arrimé sur une partie remorque (410) d'un véhicule de transport (415) ; au moins une source de rayonnement, plus particulièrement une source de rayons X, positionnée à l'intérieur dudit volume clos, des émissions émanant de ladite source de rayonnement définissant un champ de vision ; au moins un réseau de détecteurs positionné à l'intérieur dudit volume clos ou fixé physiquement audit conteneur ; et une pluralité de pieds (425) fixés, au moyen de pistons (426), audit conteneur (405) à chacun de quatre coins dudit conteneur, le procédé comprenant :
l'extension d'au moins un de ladite pluralité de pieds (425) horizontalement vers l'extérieur depuis lesdits quatre coins dudit conteneur à l'aide d'au moins un desdits pistons (426) ;
l'extension de chacun de ladite pluralité de pieds (425) verticalement vers le bas de façon à ce que chacun de ladite pluralité de pieds soit au contact du sol à un site de surveillance ;
la poursuite de l'extension de chacun de ladite pluralité de pieds (425) verticalement vers le bas pour permettre audit conteneur (405) de se soulever de la partie remorque (410) et d'être entièrement soutenu par ladite pluralité de pieds (425) sur ledit site de surveillance ; et,
la conduite de ladite partie remorque à l'écart dudit site de surveillance.

11. Procédé selon la revendication 10, dans lequel une hauteur de ladite pluralité de pieds est réglée pour admettre une pluralité de hauteurs de balayage.

12. Procédé selon la revendication 11, dans lequel la hauteur dudit conteneur au-dessus du sol est déterminée à l'aide d'une pluralité de données, ladite pluralité de données comportant des dimensions des objets en cours d'inspection et/ou une zone d'inspection souhaitée et/ou une configuration du réseau de capteurs et/ou un champ de vision souhaité et/ou un type de la source de rayons X et/ou une configuration de la source de rayons X et/ou des structures restrictives et/ou la présence de personnes.

13. Procédé selon la revendication 10, 11 ou 12, dans lequel chacun de ladite pluralité de pieds est adapté à s'escamoter complètement de façon à ce que ledit conteneur soit positionné au niveau du sol, et dans lequel deux desdites quatre parois (910) dudit conteneur se rabattent et ledit plafond (915) s'étend verticalement vers le haut pour former un portail de transit sur ledit site de surveillance.
